(19) Europäisches Patentamt
European Patent Office
Office européen des brevets

(11) **EP 2 786 037 B1**

(12) **EUROPÄISCHE PATENTSCHRIFT**

(45) Veröffentlichungstag und Bekanntmachung des Hinweises auf die Patenterteilung:
**29.09.2021 Patentblatt 2021/39**

(51) Int Cl.:
**F16D 65/18** (2006.01)    **F16D 55/226** (2006.01)

(21) Anmeldenummer: **12794244.9**

(22) Anmeldetag: **21.11.2012**

(86) Internationale Anmeldenummer:
**PCT/EP2012/073173**

(87) Internationale Veröffentlichungsnummer:
**WO 2013/079371 (06.06.2013 Gazette 2013/23)**

(54) **PNEUMATISCH BETÄTIGBARE SCHEIBENBREMSE**

PNEUMATICALLY ACTUABLE DISC BRAKE

FREIN À DISQUE À ACTIONNEMENT PNEUMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2011 DE 102011119791**

(43) Veröffentlichungstag der Anmeldung:
**08.10.2014 Patentblatt 2014/41**

(73) Patentinhaber: **KNORR-BREMSE Systeme für Nutzfahrzeuge GmbH**
**80809 München (DE)**

(72) Erfinder:
• **WERTH, Alexander**
 **80999 München (DE)**

• **BAUMGARTNER, Johann**
 **85368 Moosburg (DE)**
• **SEIDENSCHWANG, Matthias**
 **81249 München (DE)**
• **PESCHEL, Michael**
 **82296 Schöngeising (DE)**
• **STAAHL, Christian**
 **80339 München (DE)**
• **TRIMPE, Robert**
 **82234 Weßling (DE)**

(56) Entgegenhaltungen:
WO-A1-02/095255    DE-A1- 10 226 035
US-B2- 7 258 206

**Beschreibung**

Die Erfindung betrifft eine pneumatisch betätigbare Scheibenbremse mit einer Selbstverstärkungseinrichtung nach dem Oberbegriff des Anspruchs 1.

Derartige Scheibenbremsen sind in unterschiedlicher Bauweise bekannt und haben sich bereits bestens bewährt.

Bei elektromechanischen Scheibenbremsen mit Selbstverstärkung ist die Maßnahme, im Selbstverstärkungsmechanismus veränderliche Keilwinkel einzusetzen, bekannt. Beispielhaft illustrieren dies die Dokumente EP 1389282 A1, DE 102 26 035, US 7,258,206 B2.

Der veränderliche, in der Regel degressiv verlaufende Keilwinkel wird als veränderlicher Auslegungsparameter betrachtet. Das Ziel ist in allen Fällen, die nutzbare Selbstverstärkung zur Minimierung der erforderlichen Betätigungsenergie auf einem maximal möglichen Niveau zu halten indem eine Auslegung $\mu = \tan(\alpha)$ angestrebt wird. Hierbei ist $\tan(\alpha)$ der Tangens des Rampenwinkels und $\mu$ der Reibbeiwert zwischen Bremsbelag und Bremsscheibe. Bei einer derartigen Auslegung lässt sich die benötigte Betätigungsenergie der Bremse theoretisch auf Null reduzieren. In der praktischen Anwendung sind lediglich die Reibungsverluste des Betätigungsmechanismus sowie die durch Reibwertschwankungen bedingten Abweichungen von dem angestrebten Idealzustand durch die Betätigungsenergie auszugleichen.

Aus dem Stand der Technik ist ebenfalls bekannt, nur in der Anfangsphase der Betätigung zur schnellen Überwindung des Lüftspieles der Bremse einen relativ großen Rampenwinkel anzuwenden, der dann im Krafthubbereich in einen Bereich $\tan(\alpha) = \mu$ übergeht. Da der Reibbeiwert $\mu$ üblicherweise aufgrund der Druckempfindlichkeit der Reibbelagmaterialien mit zunehmender Spannkraft geringere Beträge annimmt, ergibt sich bei optimaler Anpassung ein degressiver Verlauf der angepassten Rampenwinkel.

Für die Anwendung einer derartigen Rampenauslegung ist die durch die Positionssteuerung erzielte "harte" Stellcharakteristik der elektromechanisch betätigten Bremsen sowie Spielfreiheit der Übertragungselemente eine notwendige Voraussetzung, da bei einem Betrieb im kritischen Auslegungsbereich schon geringe Reibbeiwertschwankungen dazu führen, dass der Bremsbelag heftig von einer zustellenden in eine rückstellende Reaktion wechseln kann.

Bei einer pneumatischen Betätigung der Bremse ist aufgrund der Drucksteuerung und der damit erzielten "weichen" Stellcharakteristik ein derartiges Verhalten nicht beherrschbar. Solche wechselnden Reaktionen aufgrund von Reibwertschwankungen können starke Bremsenschwingungen auslösen, welche bis zu Unbeherrschbarkeit des Fahrzeuges führen können. Da pneumatisch betätigte Bremsen nur über begrenzte Rückstellkräfte verfügen, muss neben der Vermeidung der wechselnden Reaktionen auch ein sicher selbsttätiges Rückstellen der Bremse gewährleistet werden. Aus dieser Betrachtung ergibt sich die Erkenntnis, dass die bei elektromechanischen Bremsen angestrebte Auslegung der Verstärkungsrampen zur Erzielung eines minimalen Betätigungsenergiebedarfes nicht auf druckluftbetätigte Bremsen übertragbar ist.

Es ist daher die Aufgabe der vorliegenden Erfindung, eine verbesserte pneumatisch betätigbare Scheibenbremse mit Selbstverstärkung zu schaffen.

Die Aufgabe wird durch eine pneumatisch betätigbare selbstverstärkende Scheibenbremse mit den Merkmalen des Anspruchs 1 gelöst.

Demgemäß ist eine pneumatisch betätigbare Scheibenbremse mit einem Bremssattel, wenigstens einem zuspannseitigen und einem reaktionsseitigen Bremsbelag und einer Bremsscheibe, zumindest einem sowohl in Richtung parallel zu einer Bremsscheibendrehachse als auch parallel zur Bremsscheibenreibfläche beweglichen zuspannseitigen Bremsbelag, einer Betätigungseinrichtung mit einem wenigstens mit Druckluft beaufschlagbaren Bremszylinder als Bremskrafterzeuger, der auf eine Zuspannvorrichtung zum Zuspannen des Bremsbelags wirkt und mindestens einer Selbstverstärkungseinrichtung mit Rampen geschaffen, wobei die Rampen jeweils eine degressive Rampenkurve auf-

$$h = \frac{1}{m} \cdot \left( n - e^{-m \cdot u} \right)$$

weisen, welche nach der Formel                   erstellt ist. Dabei bedeuten h = Kurvenverlauf der Rampe, m = Konstante, n = Tangens eines Anfangskeilwinkels bei einem Hub von Null, und u = Umfangsweg.

Bei dieser Scheibenbremse ist der Grad der Selbstverstärkung durch den Verlauf der Rampengeometrie sowie durch deren Zuordnung zu den Betriebszuständen der Bremse optimal auf die Anforderungen nach sicherem selbsttätigen Lösen der Bremse bei gleichzeitig maximal möglicher Ausnutzung der Selbstverstärkung zur Minimierung der Bremszylinder-Dimensionen angepasst.

Der Vorteil der Anwendung der Selbstverstärkung bei der druckluftbetätigten Bremse besteht zum Einen im geringeren Druckluftbedarf und der damit verbundenen Energieeinsparung und zum Anderen in der möglichen Verkleinerung der Betätigungszylinder aufgrund des reduzierten Betätigungskraftbedarfes. Durch die Verkleinerung der Bremszylinder kann Bauraum und Gewicht der Bremse sowie die Ansprechzeit derselben reduziert werden. Zudem ist infolge der kleineren Zylindervolumina auch der Schadraum derselben reduziert, was wiederum eine Minderung des Druckluft- und damit des Energiebedarfes zur Folge hat, da insbesondere bei Teillastbremsungen der Druckluftbedarf der Bremsbetätigung in starkem Maße durch die Schadvolumina beeinflusst wird.

Pneumatisch betätigte Scheibenbremsen mit Selbstverstärkung sind bislang ausschließlich mit gerade verlaufenden Rampen bekannt, wobei der Rampenwinkel so gewählt ist, dass auch bei den größtmöglich denkbaren Reibbeiwerten des Bremsbelages noch ein sicher selbsttätiges Lösen gegeben ist.

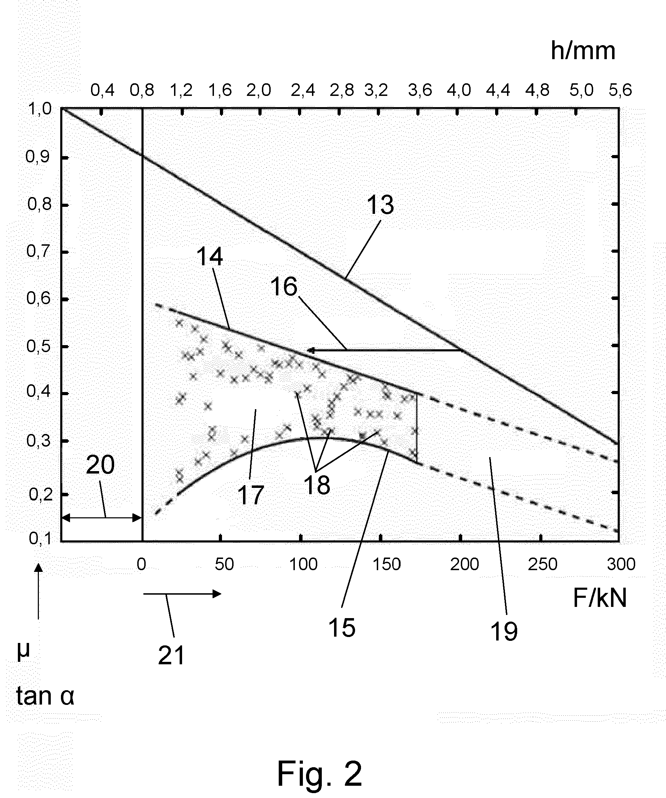

Durchgeführte Versuche zeigen, dass auch bei einer pneumatisch betätigten Scheibenbremse mit Selbstverstärkung eine Anpassung der Rampenwinkel an die Betriebsbedingungen vorteilhaft ist. Reibwertanalysen ergeben nämlich, dass die Reibbeiwerte gerade im Bereich niedriger Bremskräfte extrem große Streuungen aufweisen, während bei hohen Bremskräften eine Drift zu insgesamt niedrigeren Mittelwerten bei erheblich geringerer Streubreite der Reibbeiwerte festgestellt wurde. Dieses grundsätzliche Reibwertverhalten wurde bei Reibbelägen verschiedener Hersteller übereinstimmend festgestellt. Dies ist z.B. in Fig. 2 in einem Diagramm dargestellt.

Es ist ein für den Betrieb der erfindungsgemäßen druckluftbetätigten Scheibenbremsen mit Selbstverstärkung zur Erzielung einer bestmöglichen Ausnutzung der Selbstverstärkung bei zuverlässigem und auch im Falle von ABS-Regelvorgängen ausreichend schnellem Löseverhalten der Bremse optimierter RampenWinkelverlauf gefunden worden. Ein Verfahren ermöglicht die Ermittlung und Festlegung sowie die Einstellung dieses optimalen Rampenverlaufes.

Eine wesentliche Vorgabe hierbei ist, dass bei maximalem Betätigungsdruck sowohl bei Vorliegen des Berechnungsreibwertes als auch bei einer Minderung desselben um bis zu 20 % die gleiche Gesamtspannkraft und damit die gleiche Wirkung der Bremse erzielt wird, wie das bei einer leistungsgleichen Bremse mit konventioneller Betätigung der Fall ist.

Hierzu wird folgender Zusammenhang herangezogen:
Die das Bremsmoment bestimmende Umfangskraft $F_U$ der Bremse ergibt sich aus der Spannkraft mal dem zweifachen Reibbeiwert.

$$F_U = F_S \cdot 2 \cdot \mu \qquad\qquad (1)$$

Bei der konventionellen Bremse ergibt sich die Spannkraftdirekt aus der Kraft $F_K$ des Betätigungskolbens.

Und mit

$$F_U = F_K \cdot 2 \cdot \mu$$
$$F_K = p \cdot A_Z \cdot i \cdot \eta$$
$$F_U = p \cdot A_Z \cdot i \cdot \eta \cdot 2 \cdot \mu \qquad\qquad (2)$$

Bei der selbstverstärkenden Bremse der hier betrachteten Bauart setzt sich die Spannkraft zusammen aus der Kraft des/der Betätigungskolben + Kraft des/der Verstärkungskolben. Es gilt:

$$F_S = F_{SK} + F_{SV}$$

Die Kraft des/der Selbstverstärkungskolben ergibt sich wiederum aus der Umfangskraft durch den $\tan(\alpha)$ des Rampenwinkels. Somit ist:

$$F = F_{SK} + \frac{F_U}{\tan(\alpha)}$$

Mit

$$F_U = F_S \cdot \mu$$

folgt daraus:

$$F_S = F_{SK} + F_S \cdot \left( \frac{\mu}{\tan(\alpha)} \right)$$

Und schließlich:

$$F_S = \frac{F_{SK}}{\left(1 - \frac{\mu}{\tan(\alpha)}\right)}$$

Setzt man diese Beziehung in die Formel (1) für die Gesamtumfangskraft der Bremse ein so ergibt sich:

$$F_U = \frac{F_{SK}}{\left(1 - \frac{\mu}{\tan(\alpha)}\right)} \cdot 2 \cdot \mu \qquad\qquad (3)$$

Und mit

$$F_{SK} = p \cdot A_Z \cdot i \cdot \eta$$

$$F_U = p \cdot A_{Z,SV} \cdot i_{SV} \cdot \eta_{SV} \cdot \frac{1}{\left(1 - \frac{\mu}{\tan(\alpha)}\right)} \cdot 2 \cdot \mu \qquad\qquad (4)$$

Der Vergleich der Formeln (2) und (4) zeigt, dass die gestellte Forderung nach gleichbleibend proportionalem Zusammenhang von Druck $p$ und Reibbeiwert $\mu$ der Bremsen mit und ohne Selbstverstärkung gegeben ist, wenn der Quotient $\frac{\mu}{\tan(\alpha)}$ konstant bleibt. D.h., die zur Kompensation einer Reibwertminderung not-wendige Spannkrafterhöhung muss bei der Bremse mit Selbstverstärkung infolge der Degression des Rampenwinkels zu einer so großen Minderung des $\tan(\alpha)$ führen, dass der Quotient $\frac{\mu}{\tan(\alpha)}$ unverändert ist. Diese Forderung soll zumindest im Bereich der maximalen Spannkraft der Bremse weitgehend erfüllt sein um die Forderung nach gleicher maximaler Bremswirkung von konventioneller Bremse und SV Bremse bei maximalem Bremsdruck $p$ zu erfüllen.

Ein erfindungsgemäßes Verfahren zum Ermitteln und Festlegen einer Rampenkurve eines Rampenverlaufes von Rampen einer oben beschriebenen pneumatisch betätigbaren Scheibenbremse wird bereitgestellt und weist folgende Verfahrensschritte auf: Ermitteln einer zu erwartenden Reibwertstreuung der für die Anwendung in der Scheibenbremse vorgesehenen und zugelassenen Bremsbelagqualitäten und Zuordnen eines Rampenhubs zu einer Spannkraft der Scheibenbremse; Ermitteln einer obere Grenzkurve der so erhaltenen Reibwertstreuung und Zuordnen von Reibbeiwerten und Rampenwinkeln nach der Beziehung $\mu = \tan(\alpha)$; Annähern des linearen Funktionsverlaufes $\tan(\alpha) = \frac{dh}{du}$; Darstellen der ersten Ableitung der Rampenkurve $h = f(u)$ durch den Tangens des Rampenwinkels $\alpha$; und Festlegen der Rampenkurve durch die Beziehung

$$u = \int \frac{1}{f(h)} dh = G(h)$$

$$h = G^{-1}(u).$$

- Zunächst wird die zu erwartende Reibwertstreuung der für die Anwendung in der Bremse vorgesehenen und zugelassenen Bremsbelagqualitäten ermittelt und die Ergebnisse wie im Diagramm nach Fig. 2 dargestellt. Die Abszisse zeigt die Spannkraft der Bremse welcher entsprechend dem linearen Zusammenhang mit der elastischen Sattelaufweitung auch der Rampenhub zugeordnet wird. Wobei sich der Rampenhub aus der elastischen Sattelaufweitung plus Lüftspiel ergibt.

- Die obere Grenzkurve des Reibwertstreubandes wird ermittelt und unter Berücksichtigung eines die Rückstellreserve bildenden Sicherheitsabstandes, eines max. möglichen Anfangskeilwinkels zur Gewährleistung einer sicheren Rück-

$$\frac{\mu}{\tan(\alpha)} = const$$

stellung sowie der Forderung . für den Bereich der maxi-malen Spannkraft die Auslegungskurve = angestrebte Rampensteigung festgelegt.

- Auf der Ordinate werden den Reibbeiwerten $\mu$ nach der Beziehung $\mu = \tan(\alpha)$ die entsprechenden Keilwinkel zugeordnet.
- Auf der Abszisse wird der Spannkraft der Bremse der Rampenhub $h$ zugeordnet welcher sich aus dem linearen Zusammenhang mit der elastischen Sattelaufweitung $F_S = C_S \cdot h$ plus Lüftspiel bestimmt, wobei $C_S$ die Steifigkeit des Bremssattels inklusive Bremsbelägen, also dessen Gesamt - Federrate kennzeichnet. Hierbei ist berücksichtigt, dass bei Spannkraft Null der Anlegepunkt vorliegt wo die Rampen entsprechend dem vorhandenen Lüftspiel bereits einen Weg zurückgelegt haben.
- Der angestrebte Verlauf der Rampensteigung bildet den Ausgangspunkt für die Festlegung des Rampenverlaufes.

$$\tan(\alpha) = f(h)$$

- In diesem Falle wird beispielhaft der Funktionsverlauf durch eine lineare Beziehung $\tan(\alpha) = f(h) = -m \cdot h + n$ angenähert.
- Der Lösungsansatz geht von der Erkenntnis aus, dass der Tangens des Rampenwinkels $\alpha$ die erste Ableitung der Rampenkurve $h = f(u)$ darstellt. Es gilt im allgemeinen Fall: $\tan(\alpha) = \frac{dh}{du} = f(h)$ , und für das gewählte Beispiel

$$\tan(\alpha) = \frac{dh}{du} = -m \cdot h + n$$

. Die Parameter der Funktion $f(h)$ (die Konstanten $m$ und $n$ im linearen Beispiel) können aus dem angestrebten Verlauf der Rampensteigung ermittelt werden. Durch Bildung des Integrals der gewählten Beziehung wird schließlich der Kurvenverlauf der Rampe ermittelt. Durch Integration ergibt sich im allgemeinen Fall:

$$u = \int \frac{1}{f(h)} dh = G(h)$$

$$h = G^{-1}(u)$$

Wobei vorausgesetzt ist, dass $G(h)$ im gewünschten Intervall [0, $h_{max}$] invertierbar ist. Für das ausgewählte

$$h = \frac{1}{m} \cdot \left(n - e^{-m \cdot u}\right)$$

lineare Beispiel ergibt sich: .

Die Erfindung wird nun anhand von Ausführungsbeispielen mit Bezug auf die beigefügten Zeichnungen näher erläutert. Hierbei zeigt:

Fig. 1    eine beispielhafte, vereinfachte Schnittdarstellung einer Scheibenbremse;

Fig. 2    eine grafische Darstellung eines Reibwertstreubereichs und daraus abgeleitete relevante Größen für eine Rampenauslegung; und

Fig. 3    eine grafische Darstellung einer Rampenkurve nach einer gewählten Auslegung aus Fig. 2.

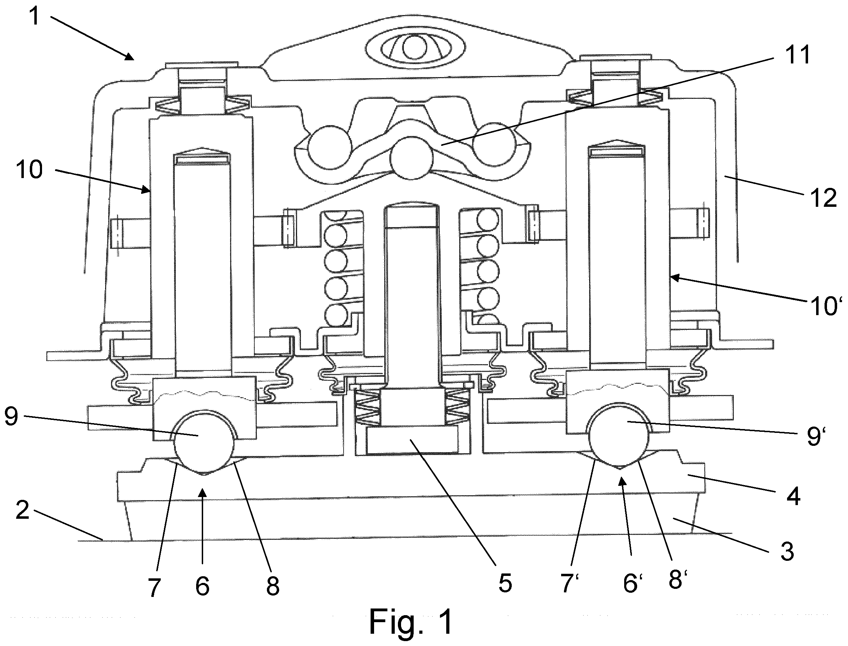

In Fig. 1 ist eine beispielhafte, vereinfachte Schnittdarstellung einer Scheibenbremse 1 gezeigt.
Dies ist eine mögliche Bauform. Eine Bremsscheibe 2 ist unten angedeutet. An ihrer Bremsscheibenreibfläche liegt ein zuspannseitiger Bremsbelag 3, welcher auf der Druckplatte 4 angebracht ist, an. Ein gegenüberliegender Bremsbelag ist nicht dargestellt. Ein Bremssattel 12 umgreift eine Zuspannvorrichtung, welche einen Betätigungsstößel 5 mit einem Bremsdrehhebel 11 und Selbstverstärkungseinrichtungen 6, 6' aufweist. Die Selbstverstärkungseinrichtungen 6, 6' sind parallel zu dem Betätigungsstößel 5 angeordnet.

Eine Selbstverstärkungseinrichtung 6, 6' ist gebildet durch die folgenden Bauteile: Druckplatte 4 mit Rampen 7, 7' und 8, 8', und einen Druckstempel 10, 10' mit nicht näher bezeichneten Gewindespindeln. Auf die Funktion wird hier nicht weiter eingegangen, sie wird zum Beispiel in der Offenlegungsschrift WO 2009/090011 A1 erläutert.

Die Druckplatte 4 ist parallel zur Bremsscheibenreibfläche verschieblich und steht über Rollkörper, hier Kugeln 9 und 9', welche in ihr in keilartigen Rampen 7, 7' und 8, 8' gelagert sind, mit den axial längenveränderlichen Druckstempeln 10, 10' in Wirkverbindung. Die Kugeln sind in den Druckstempeln 10, 10' jeweils in kalottenartigen Ausnehmungen geführt. Den Rampen 7, 7' und 8, 8' könnten auch keilartige Rampen in den Druckstempeln 10, 10' ergänzend gegenüberliegen. Die keilartigen Rampen 7, 7' und 8, 8' könnten auch nur in den Druckstempeln 10, 10' ausgebildet sein.

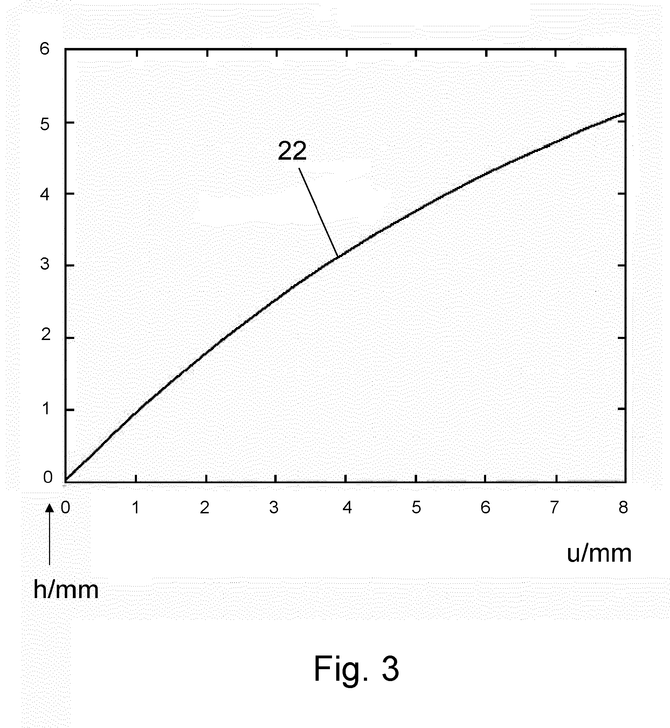

Die keilartigen Rampen 7, 7' und 8, 8' sind im Wesentlichen in einem spitzen Winkel von mehr als 0 und weniger als 90° zur Bremsscheibenreibfläche ausgerichtet und weisen jeweils eine Rampenkurve 22 (siehe Fig. 3) auf, die unten noch ausführlich beschrieben wird.

Eine Auslegung für eine typische Scheibenbremse für schwere Nutzfahrzeuge, z.B. nach Fig. 1, kann nach dem in Fig. 2 dargestellten Diagramm vorgenommen werden.

Fig. 2 zeigt eine grafische Darstellung eines Reibwertstreubereichs 17 und daraus abgeleitete relevante Größen für eine Rampenauslegung.

Die grafische Darstellung in Fig. 2 zeigt für eine typische druckluftbetätigte Scheibenbremse 1 für schwere Nutzfahrzeuge die Streuungen eines Reibbeiwertes $\mu$ in Abhängigkeit von einer Spannkraft F der Scheibenbremse 1 für verschiedene, für die Anwendung vorgesehene Qualitäten eines Bremsbelags 3. Diese Streuungen von Messwerten 18 sind in einem Reibwertstreubereich 17 mit einer oberen Grenzkurve 14 und einer unteren Grenzkurve 15 verteilt. Aus ihnen kann weiterhin ein Extrapolationsbereich 19 ermittelt werden.

Für die Auslegung der Rampen 7, 7'; 8, 8' ist bei einer pneumatisch betätigten Bremse nur die obere Grenzkurve 14 dieses Streubandes, d.h. des Reibwertstreubereichs 17 von Bedeutung.

Die Ordinate des Diagramms der grafischen Darstellung in Fig. 2 zeigt den Betrag des Reibbeiwertes $\mu$, welchem nach der Beziehung $\mu = \tan(\alpha)$ die Rampenwinkel $\alpha$ zugeordnet werden können, die für diesen Reibbeiwert $\mu$ (ohne Berücksichtigung der Reibwiderstände) gerade den Grenzfall zwischen selbsttätigem Zustellen (Blockieren) und selbsttätigem Lösen der Scheibenbremse 1 darstellen.

Zunächst wird die zu erwartende Reibwertstreuung der für die Anwendung in der Bremse vorgesehenen und zugelassenen Bremsbelagqualitäten ermittelt und die Ergebnisse als Reibwertstreubereich 17 im Diagramm nach Fig. 2 dargestellt. Die Abszisse zeigt die Spannkraft F der Bremse. welcher entsprechend dem linearen Zusammenhang mit der elastischen Sattelaufweitung auch der Rampenhub h zugeordnet wird. Wobei sich der Rampenhub aus der elastischen Sattelaufweitung plus Lüftspiel ergibt.

Die obere Grenzkurve 14 des Reibwertstreubandes wird ermittelt und unter Berücksichtigung eines die Rückstellreserve 16 bildenden Sicherheitsabstandes, eines max. möglichen Anfangskeilwinkels zur Gewährleistung einer

$$\frac{\mu}{\tan(\alpha)} = const$$

sicheren Rückstellung sowie der Forderung . für den Bereich der maximalen Spannkraft die Auslegungskurve = angestrebte Rampensteigung festgelegt.

Auf der Ordinate werden den Reibbeiwerten $\mu$ nach der Beziehung $\mu = \tan(\alpha)$ die entsprechenden Keilwinkel zugeordnet.

Auf der Abszisse wird der Spannkraft der Bremse der Rampenhub $h$ zugeordnet welcher sich aus dem linearen Zusammenhang mit der elastischen Sattelaufweitung $F_S = C_S \cdot h$ plus Lüftspiel bestimmt, wobei $C_S$ die Steifigkeit des Bremssattels inklusive Bremsbelägen, also dessen Gesamt - Federrate kennzeichnet. Hierbei ist berücksichtigt, dass bei Spannkraft Null der Anlegepunkt vorliegt wo die Rampen entsprechend dem vorhandenen Lüftspiel bereits einen Weg zurückgelegt haben.

Der angestrebte Verlauf der Rampensteigung bildet den Ausgangspunkt für die Festlegung des Rampenverlaufes indem der in diesem Falle lineare Funktionsverlauf $\tan(\alpha) = \frac{dh}{du}$ durch eine Beziehung, z.B.

$\tan(\alpha) = \frac{dh}{du} = -m \cdot h + n$ angenähert wird.

Der Lösungsansatz geht von der Erkenntnis aus, dass der Tangens des Rampenwinkels $\alpha$ die erste Ableitung der Rampenkurve $h = f(u)$ darstellt.

Es gilt: $\tan(\alpha) = \frac{dh}{du} = -m \cdot h + n$. Die Konstanten *m* und *n* können aus dem angestrebten Verlauf der Rampensteigung ermittelt werden. Durch Bildung des Integrals der gewählten Beziehung wird schließlich der Kurvenverlauf der Rampe, d.h. eine Rampenkurve 22 (siehe Fig. 3) ermittelt.

Durch Integration ergibt sich:

$$h = \frac{1}{m} \cdot \left( n - e^{-m \cdot u} \right)$$

Dies soll nun anhand eines Beispiels dargestellt werden.

Auf der Abszisse ist die Spannkraft F der Bremse aufgetragen. Der Spannkraft F kann die jeweilige Rampenposition zugeordnet werden, indem der erforderliche Krafthub bzw. Rampenhub *h* mit Hilfe der Federrate $C_S$ des Bremssattels 12 nach der Beziehung $F_S = C_S \cdot h$ ermittelt wird. Für eine Sattelfederrate von z.B. 62,5 kN/mm ergibt sich dann: h (mm) = Fs / 62,5. Da diese Werte ab Anlegepunkt der Bremse ermittelt sind, muss zur Bestimmung des gesamten Hubes der Bremse noch der durch das Lüftspiel (in Fig. 2 mit dem Bezugszeichen 20 versehener Doppelpfeil) vorgegebene Anlegeweg in der gleichen Weise ermittelt werden.

Die obere Grenzkurve 14 des Reibwertstreubandes weist in dieser Auswertung einen angenähert linearen Verlauf auf.

Für eine optimierte Rampenauslegung muss von der experimentell ermittelten Grenzwertkurve 14 ein Sicherheitsabstand zur Berücksichtigung von ggf. nicht erfassten Reibwertstreuungen sowie ein weiterer Abstand als "Rückstellreserve" 16 zur Erzielung eines sicheren und im Fall von ABS Regelvorgängen ausreichend schnellen Rückstellverhaltens vorgesehen werden. In dem im Diagramm in Fig. 2 dargestellten Beispiel ist für die Spannkraft 200 kN ein Abstand des tan($\alpha$) des Keilwinkels zum Reibwert $\mu$ von 0,135 gewählt. Je nach der zu erwartenden Reibwertstreuung der verwendeten Bremsbeläge können auch ein größerer oder kleinerer Abstand sowie ungleiche Abstände im Bereich hoher und niedriger Spannkräfte F sinnvoll sein. Ebenso kann es notwendig sein, einen nichtlinearen Kurvenverlauf zu wählen, z.B. um den Einfluss stark schwankender Bremslüftspiele, z.B. infolge von schräg verschlissenen Bremsbelägen, zu begrenzen. In jedem Fall wird der Rampenwinkelverlauf in der beschriebenen Weise aus dem Verlauf der oberen Grenzkurve 14 des Reibwertstreubandes des Reibwertstreubereichs 17 ermittelt.

Für die Beziehung $\tan(\alpha) = \frac{dh}{du}$ wird nun ein linearer Ansatz in der Form:

$$\tan(\alpha) = \frac{dh}{du} = -m \cdot h + n$$

gemacht. Die Konstante *n* stellt den Tangens des Anfangskeilwinkels bei Hub Null dar und wird durch die Festlegung eines gewünschten Kennlinienverlaufes bestimmt.

Im Beispiel: Für den Betriebspunkt F=180 kN ergibt sich bei dem Berechnungsreibwert von $\mu$ = 0,375 eine Umfangskraft $F_U$ von 135 kN. Bei einer Reibwertminderung von 20% ($\mu$ = 0,3) ist eine Erhöhung der Spannkraft F im Verhältnis $\frac{0,375}{0,3} = 1,25$ auf 225 kN erforderlich. Der tan($\alpha$) im Betriebspunkt F=225 kN ergibt sich durch Multiplikation des tan(a) im Betriebspunkt $180kN \cdot \frac{0,375}{0,3}$

$$\tan(\alpha) \cdot 180 = 55 \implies \tan(\alpha) \cdot 225 = 55 \cdot 0,8 = 44$$

Aus den beiden Betriebspunkten der Kennlinie ergibt sich deren Steigung und auch deren Anfangswert bei *h* = 0. Dieser Anfangswert beträgt

$$n = 1,112 \cdot$$

In einem vereinfachten Verfahren kann auch der maximal mögliche Anfangskeilwinkel festgelegt werden, woraus sich der $\tan(\alpha)$ für den Rampenweg 0 ergibt. Z.B. gewählter Anfangskeilwinkel 45° => $n = \tan(45°) = 1{,}0$

$$h = \frac{1}{m} \cdot \left( n - e^{-m \cdot u} \right)$$

Zur Ermittlung der Konstanten m werden die Maximalwerte für *h* und *m* aus der Beziehung in einer Abschätzung festgelegt. Der maximale Rampenhub soll im Beispiel 4,7 mm bei einem maximalen Umfangsweg von 7 mm betragen

Es ergibt sich:

$$h\left( u = 7 \right) = 4{,}7$$

$$\frac{1}{m}\left( 1 - e^{-m \cdot 7} \right) = 4{,}7$$

$$m \approx 0{,}1225$$

$$\underline{h\left( u \right) = 8{,}162 \cdot \left( 1 - e^{-0{,}1225 \cdot u} \right)}$$

Es ergibt sich dazu die in Fig. 3 dargestellte Rampenkurve 22 nach der oben gewählten beispielhaften Auslegung aus Fig. 2. Die Rampenkurve 22 verläuft degressiv.

Die Auslegung der Keilrampen 7, 7'; 8, 8' einer mit Druckluft betätigte Scheibenbremse 1 mit Selbstverstärkung ist im Folgenden zusammengefasst.

- Aus der Reibwertstreuung / Reibwertstreubereich 17 der für die Anwendung vorgesehenen Bremsbelag-Qualitäten unter Berücksichtigung einer notwendigen Rückstellreserve 16 wird eine Formgebung der Keilrampen 7, 7'; 8, 8' ermittelt.

- Eine experimentelle Ermittlung der Grenzkurve 14 der max. möglichen Reibbeiwerte $\mu$ unter Berücksichtigung der möglichen Variation von Bremskraft, Temperatur der Reibkörper und Gleitgeschwindigkeit zwischen den Reibkörpern erfolgt.

- Die Rampenwinkel $\alpha$ werden zu den die Grenzkurve 14 bestimmenden Reibbeiwerten $\mu$ nach der Beziehung $h = f(u)$ ermittelt.

- Eine Auslegungskurve der Rampensteigung 13 unter Festlegung einer notwendigen Rückstellreserve 16 zur Erzielung eines zuverlässigen und bei ABS Regelvorgängen ausreichend schnellen Löseverhaltens der Bremse wird ermöglicht, wobei die Rückstellreserve 16 als Vergrößerung der die Grenzkurve 14 bestimmenden Keilwinkel $\alpha$ bzw. als der $\tan(\alpha)$ derselben ausgedrückt wird.

- Festlegung der Auslegungskurve nach der Vorgabe $\dfrac{\mu}{\tan(\alpha)} = const$ . für den Bereich hoher Bremsenspannkräfte F, insbesondere im Bereich oberhalb von 75 % der Maximalspannkraft. Festlegung nach einem auszuwählenden Betriebspunkt in diesem Bereich und bestmögliche Annäherung an die Auslegungsbedingung in dem Betriebsbereich > 75 % der Maximalspannkraft F.

- Bestimmung der Konstanten *n* bzw. eines größtmöglichen Anfangskeilwinkels $\alpha$ zur schnellen Überwindung des Lüftspiels 20.

- Approximation der Auslegungskurve durch eine geeignete mathematische Beziehung z.B. der Form:

$$\tan(\alpha) = \frac{\mathrm{d}h}{\mathrm{d}u} = -m \cdot h + n$$

- Bestimmung des Rampenverlaufes $h = f(u)$ durch Bildung des Integrals der gewählten Beziehung für $\tan(\alpha) = \frac{dh}{du}$

- Bestimmung der Konstanten $n$ aus dem vorgegebenen Kennlinienverlauf bzw. durch Festlegung eines maximal möglichen Anfangs-Rampenwinkels und dem sich für diesen Anfangswinkel ergebenden $\tan(\alpha)$.

- Bestimmung der Konstante $m$ durch Festlegung des Betriebspunktes für Maximalhub der Bremse mit $h_{max}$ und $u_{max}$ und Einsetzen dieser Werte in die ermittelte Beziehung $h = f(u)$

- Verlauf der Keilrampen 7, 7'; 8, 8' beliebig nichtlinear entsprechend den bei der Auslegung gefundenen Notwendigkeiten.

- Von dem maximalen Anfangskeilwinkel ausgehend vorwiegend degressiver Rampenverlauf der Rampenkurve 22 entsprechend der o.g. Beziehung $h = f(u)$

- Betrag des Tangens des Anfangskeilwinkels $\alpha$ vorzugsweise das 1,9 bis 3,6, fache des Nennreibwertes. Z.B. Nennreibwert 0,375; Tangens des Anfangsreibwinkels $\alpha$ 0,70 bis 1,35

- Tangens des Keilwinkels bei ca. 75% des Maximalhubes das 1,2 bis 1,5 - fache des Nennreibwertes. Z.B. $\tan(\alpha)$ = 0,45 bis 0,56 bei $h$ = 3,75 mm

- Je nach Ausführungsart des Rampensystems (Einfach- oder Doppelrampe) stellt die tatsächlich ausgeführte Rampenkurve 22 eine Äquidistante zu dem nach der vorliegenden Methode ermittelten Rampenverlauf dar.

Die Erfindung ist im Rahmen der beigefügten Ansprüche modifizierbar und nicht auf die oben beschriebenen Ausführungsbeispiele beschränkt.

**Bezugszeichenliste**

| 1 | Scheibenbremse |
|---|---|
| 2 | Bremsscheibe |
| 3 | Bremsbelag |
| 4 | Druckplatte |
| 5 | Betätigungsstößel |
| 6,6' | Verstärkungseinrichtung |
| 7, 7'; 8, 8' | Rampe |
| 9,9' | Kugel |
| 10, 10' | Druckstempel |
| 11 | Bremsdrehhebel |
| 12 | Bremssattel |
| 13 | Rampensteigung |
| 14, 15 | Grenzkurve |
| 16 | Rückstellreserve |
| 17 | Reibwertstreubereich |
| 18 | Messwert |
| 19 | Extrapolationsbereich |
| 20 | Lüftspiel |
| 21 | Krafthub |
| 22 | Rampenkurve |
| F | Spannkraft |
| h | Rampenhub |
| $\alpha$ | Rampenwinkel |
| $\mu$ | Reibbeiwert |

**Patentansprüche**

1. Pneumatisch betätigbare Scheibenbremse (1) mit:

   a. einem Bremssattel (12), wenigstens einem zuspannseitigen und einem reaktionsseitigen Bremsbelag (3) und einer Bremsscheibe (1);
   b. zumindest einem sowohl in Richtung parallel zu einer Bremsscheibendrehachse als auch parallel zur Bremsscheibenreibfläche beweglichen zuspannseitigen Bremsbelag (3);
   c. einer Betätigungseinrichtung mit einem wenigstens mit Druckluft beaufschlagbaren Bremszylinder als Bremskrafterzeuger, der auf eine Zuspannvorrichtung zum Zuspannen des Bremsbelags (3) wirkt; und
   d. mindestens einer Selbstverstärkungseinrichtung (6, 6') mit Rampen (7, 7'; 8, 8'),

   **dadurch gekennzeichnet, dass**

   e. die Rampen (7, 7'; 8, 8') jeweils eine degressive Rampenkurve (22) aufweisen, welche nach der Formel

   $$u = \int \frac{1}{f(h)} dh = G(h)$$

   $$h = G^{-1}(u)$$

   erstellt ist, wobei sich bei einer Annäherung mit

   $$\tan(\alpha) = f(h) = -mh + n$$

   durch Integration ergibt:

   $$h = \frac{1}{m} \cdot \left( n - e^{-m \cdot u} \right)$$

   mit:

   $\alpha$ = Rampenwinkel
   h = Kurvenverlauf der Rampe (7, 7'; 8, 8'),
   m = Konstante,
   n = Tangens eines Anfangskeilwinkels bei einem Hub von Null, und
   u = Umfangsweg.

2. Pneumatisch betätigbare Scheibenbremse (1) nach Anspruch 1, **dadurch gekennzeichnet, dass** die degressive Rampenkurve (22) unter Berücksichtigung einer Rückstellreserve (16), eines maximalen möglichen Anfangskeilwinkels und einem Zusammenhang zwischen Reibbeiwert ($\mu$) und einem Rampenwinkel ($\alpha$) für einen Bereich maximaler Spannkraft (F) festgelegt ist.

3. Pneumatisch betätigbare Scheibenbremse (1) nach Anspruch 2, **dadurch gekennzeichnet, dass** für den Zusammenhang zwischen Reibbeiwert ($\mu$) und dem Rampenwinkel ($\alpha$) $\dfrac{\mu}{\tan(\alpha)} = const$ gilt.

4. Verfahren zum Ermitteln und Festlegen einer Rampenkurve (22) eines Rampenverlaufes von Rampen (7, 7'; 8, 8') einer pneumatisch betätigbaren Scheibenbremse (1) nach einem der vorhergehenden Ansprüche, mit den Verfahrensschritten:

   (S1) Ermitteln einer zu erwartenden Reibwertstreuung der für die Anwendung in der Scheibenbremse (1) vorgesehenen und zugelassenen Bremsbelagqualitäten und Zuordnen eines Rampenhubs (h) zu einer Spannkraft (F) der Scheibenbremse (1);

(S2) Ermitteln einer obere Grenzkurve (14) der so erhaltenen Reibwertstreuung und Zuordnen von Reibbeiwerten ($\mu$) und Rampenwinkeln ($\alpha$) nach der Beziehung $\mu = \tan(\alpha)$;

(S3) Annähern des Funktionsverlaufes $\tan(\alpha) = f(h)$;

(S4) Darstellen der ersten Ableitung der Rampenkurve (22) $h = f(u)$ durch den Tangens des Rampenwinkels $\alpha$; und

(S5) Festlegen der Rampenkurve (22) durch die Beziehung

$$u = \int \frac{1}{f(h)}\, dh = G(h)$$

$$h = G^{-1}(u)$$

**5.** Verfahren nach Anspruch 4, **dadurch gekennzeichnet, dass** im Verfahrensschritt (S2) die Beziehung

$$\frac{\mu}{\tan(\alpha)} = const$$

. verwendet wird.

**6.** Verfahren nach Anspruch 4 oder 5, **dadurch gekennzeichnet, dass** unter Berücksichtigung eines eine Rückstellreserve (16) bildenden Sicherheitsabstandes, eines max. möglichen anfänglichen Rampenwinkels ($\alpha$) zur Gewährleistung einer sicheren Rückstellung sowie der Forderung $\frac{\mu}{\tan(\alpha)} = const.$ für den Bereich einer maximalen Spannkraft (F) der Rampen-kurve (22) festgelegt wird.

**7.** Verfahren nach einem der Ansprüche 4 bis 6, **dadurch gekennzeichnet, dass** sich der Rampenhub (h) aus dem linearen Zusammenhang mit einer elastischen Aufweitung des Bremssattels (12) $F_S = C_S \cdot h$ plus Lüftspiel (20) bestimmt, wobei $C_S$ die Steifigkeit des Bremssattels (12) inklusive Bremsbelägen (3), also dessen Gesamt - Federrate, bestimmt, wobei berücksichtigt wird, dass bei Spannkraft (F) gleich Null der Anlegepunkt vorliegt, wo die Rampen (7, 7'; 8, 8') entsprechend dem vorhandenen Lüftspiel (20) bereits einen Weg zurückgelegt haben.

**8.** Verfahren nach einem der Ansprüche 4 bis 7, **dadurch gekennzeichnet, dass** der lineare Funktionsverlauf $\tan(\alpha) = \frac{dh}{du}$ durch die Beziehung $\tan(\alpha) = \frac{dh}{du} = f(h)$ angenähert wird.

**9.** Verfahren nach Anspruch 8, **dadurch gekennzeichnet, dass** die Parameter der Funktion $f(h)$ aus einem angestrebten Verlauf der Rampenkurve (22) ermittelt werden.

**10.** Verfahren nach Anspruch 8 oder 9, **dadurch gekennzeichnet, dass** die Rampenkurve (22) durch Bildung des Integrals der gewählten Beziehung $\tan(\alpha) = \frac{dh}{du} = f(h)$ ermittelt wird.

## Claims

**1.** Pneumatically actuable disc brake (1) having:

a. a brake caliper (12), at least one brake pad (3) on the application side and on the reaction side, and a brake disc (1);

b. at least one brake pad (3) on the application side which is movable both in a direction parallel to a brake disc axis of rotation and parallel to the brake disc friction surface;

c. an actuating device having a brake cylinder, which can be acted on at least by compressed air, as brake force generator, which acts on an application device for applying the brake pad (3); and

d. at least one self-boosting device (6, 6') with ramps (7, 7'; 8, 8'),

**characterized in that**

e. the ramps (7, 7'; 8, 8') each have a degressive ramp curve (22) which is established according to the formula

$$u = \int \frac{1}{f(h)} dh = G(h)$$

$$h = G^{-1}(u)$$

wherein in the case of an approximation with

$$\tan(\alpha) = f(h) = -mh + n$$

there is obtained by integration:

$$h = \frac{1}{m} \cdot (n - e^{-m \cdot u})$$

where:

$\alpha$ = ramp angle,
h = curve profile of the ramp (7, 7'; 8, 8'),
m = constant,
n = tangent of a starting wedge angle at a stroke of zero, and
u = circumferential travel.

2. Pneumatically actuable disc brake (1) according to Claim 1, **characterized in that** the degressive ramp curve (22) is defined taking account of a return reserve (16), a maximum possible starting wedge angle and a relationship between the coefficient of friction ($\mu$) and a ramp angle ($\alpha$) for a region of maximum clamping force (F) .

3. Pneumatically actuable disc brake (1) according to Claim 2, **characterized in that** for the relationship between the coefficient of friction ($\mu$) and the ramp angle $(\alpha)$ $\frac{\mu}{\tan(\alpha)} = const$ . applies.

4. Method for determining and defining a ramp curve (22) of a ramp profile of ramps (7, 7'; 8, 8') of a pneumatically actuable disc brake (1) according to one of the preceding claims, comprising the method steps:

(S1) determining an expected variation of the coefficient of friction of the brake pad grades provided and permitted for use in the disc brake (1), and assigning a ramp stroke (h) to a clamping force (F) of the disc brake (1) ;
(S2) determining an upper limit curve (14) of the variation of the coefficient of friction so obtained, and assigning coefficients of friction ($\mu$) and ramp angles ($\alpha$) according to the relationship $\mu = \tan(\alpha)$;
(S3) approximating the function profile $\tan(\alpha) = f(h)$;
(S4) representing the first derivative of the ramp curve (22) $h = f(u)$ by the tangent of the ramp angle $\alpha$; and
(S5) defining the ramp curve (22) by the relationship

$$u = \int \frac{1}{f(h)} dh = G(h)$$

$$h = G^{-1}(u)$$

**5.** Method according to Claim 4, **characterized in that** in method step (S2) the relationship $\frac{\mu}{\tan(\alpha)} = const$ . is used.

**6.** Method according to Claim 4 or 5, **characterized in that** the ramp curve (22) is defined taking account of a safety distance forming a return reserve (16), a maximum possible starting ramp angle ($\alpha$) for ensuring a safe return and the requirement $\frac{\mu}{\tan(\alpha)} = const$ . for the region of a maximum clamping force (F).

**7.** Method according to one of Claims 4 to 6, **characterized in that** the ramp stroke (h) is determined from the linear relationship with a resilient widening of the brake caliper (12) $F_s = C_s \cdot h$ plus the air gap (20), wherein $C_s$ determines the stiffness of the brake caliper (12) including brake pads (3), that is to say its overall spring rate, wherein account is taken of the fact that, when the clamping force (F) is equal to zero, the application point is present at which the ramps (7, 7'; 8, 8') have already covered a distance corresponding to the air gap (20) that is present.

**8.** Method according to one of Claims 4 to 7, **characterized in that** the linear function profile $\tan(\alpha) = \frac{dh}{du}$ is approximated by the relationship $\tan(\alpha) = \frac{dh}{du} = f(h)$ .

**9.** Method according to Claim 8, **characterized in that** the parameters of the function $f(h)$ are determined from an intended profile of the ramp curve (22).

**10.** Method according to Claim 8 or 9, **characterized in that** the ramp curve (22) is determined by forming the integral of the chosen relationship $\tan(\alpha) = \frac{dh}{du} = f(h)$ .

**Revendications**

**1.** Frein (1) à disque à actionnement pneumatique comprenant :

a. un étrier (12) de frein, au moins une garniture (3) de frein du côté du serrage et du côté de la réaction et un disque (1) de frein ;
b. au moins une garniture (3) de frein du côté du serrage, mobile tant dans la direction parallèlement à un axe de rotation du disque de frein qu'également parallèlement à la surface de friction du disque de frein ;
c. un dispositif d'actionnement ayant au moins un cylindre de frein pouvant être alimenté en air comprimé comme producteur de force de freinage qui agit sur un système de serrage pour serrer la garniture (3) de frein ; et
d. au moins un dispositif (6, 6') d'auto-amplification ayant des rampes (7, 7' ; 8, 8'),

**caractérisé en ce que**

e. les rampes (7, 7'; 8, 8') ont chacune une courbe (22) de rampe dégressive qui est établie suivant la formule

$$u = \int \frac{1}{f(h)}\, dh = G(h)$$

$$h = G^{-1}(u)$$

dans lesquelles, pour une approximation avec

$$\tan(\alpha) = f(h) = -mh + n$$

on obtient par intégration :

$$h = \frac{1}{m} \cdot (n - e^{-mu})$$

avec :

α = angle de la rampe
h = tracé de courbe des rampes (7, 7' ; 8, 8'),
m = constante,
n = tangente d'un angle de coin initial pour une course de zéro, et
u = trajet de pourtour.

**2.** Disque (1) de frein à actionnement pneumatique suivant la revendication 1, **caractérisé en ce que** la courbe (22) de rampe dégressive est fixée en tenant compte d'une réserve (16) de rappel, d'un angle de coin initial possible maximum et d'une relation entre un coefficient (μ) de frottement et un angle (α) de rampe pour une plage de force (F) de serrage maximum.

**3.** Disque (1) de frein à actionnement pneumatique suivant la revendication 2, **caractérisé en ce que**, pour la relation entre le coefficient (μ) de frottement et l'angle (α) de rampe, on a $\dfrac{\mu}{\tan(\alpha)} = const$ .

**4.** Procédé de détermination et de fixation d'une courbe (22) de rampe d'un tracé de rampe (7, 7' ; 8, 8') d'un frein (1) à disque à actionnement pneumatique suivant l'une des revendications précédentes, comprenant les stades de procédé :

(S1) détermination d'une dispersion escomptée de valeurs de friction des qualités de garniture de frein prévues et autorisées, pour l'application dans le frein (1) à disque, et association d'une course (h) de rampe à une force (F) de serrage du frein (1) à disque ;
(S2) détermination d'une courbe (14) limite supérieure de la dispersion de valeurs de friction ainsi obtenue, et association de coefficients (μ) de frottement et d'angles (α) de rampe suivant la relation $\mu = \tan(\alpha)$ ;
(S3) approximation de la courbe de fonction $\tan(\alpha) = f(h)$;
(S4) représentation de la première dérivée de la courbe (22) de rampe $h = f(u)$ par la tangente de l'angle (α) de rampe ; et
(S5) fixation de la courbe (22) de rampe par la relation

$$u = \int \frac{1}{f(h)}\, dh = G(h)$$

$$h = G^{-1}(u)$$

**5.** Procédé suivant la revendication 4, **caractérisé en ce que**, dans le stade (S2) du procédé, on utilise la relation

$$\frac{\mu}{\tan(\alpha)} = const$$

**6.** Procédé suivant la revendication 4 ou 5, **caractérisé en ce qu'**en tenant compte d'une distance de sécurité formant une réserve (16) de rappel, un angle (α) de rampe initial possible maximum pour garantir un rappel sûr, ainsi que

de l'exigence $\dfrac{\mu}{\tan(\alpha)} = const$ . pour la plage d'une force de serrage (F) maximum, on fixe la courbe (22) de rampe.

7. Procédé suivant l'une des revendications 4 à 6, **caractérisé en ce que** l'on détermine la course (h) de rampe à partir de la relation linéaire avec un élargissement élastique de l'étrier (12) de frein $F_s = C_s \cdot h$ plus jeu (20) entre garnitures, dans lequel $C_s$ est la rigidité de l'étrier (12) de frein, y compris des garnitures (3) de frein, donc de son coefficient d'élasticité d'ensemble, dans lequel on tient compte du fait que, lorsque la force (F) de serrage est égale à zéro, on est au point où les rampes . (7, 7' ; 8, 8') ont déjà parcouru un trajet correspondant au jeu (20) entre garnitures présent.

8. Procédé suivant l'une des revendications 4 à 7, **caractérisé en ce qu'**on approxime la courbe de fonction linéaire

tangente $\tan(\alpha) = \dfrac{dh}{du}$ par la relation $\tan(\alpha) = \dfrac{dh}{du} = f(h)$ .

9. Procédé suivant la revendication 8, **caractérisé en ce que** l'on détermine les paramètres de la fonction *f(h)* à partir d'un tracé visé de la courbe (22) de rampe.

10. Procédé suivant la revendication 8 ou 9, **caractérisé en ce que** l'on détermine la courbe (22) de rampe en formant l'intégrale de la relation sélectionnée $\tan(\alpha) = \dfrac{dh}{du} = f(h)$ .

Fig. 1

EP 2 786 037 B1

Fig. 2

Fig. 3

**IN DER BESCHREIBUNG AUFGEFÜHRTE DOKUMENTE**

**In der Beschreibung aufgeführte Patentdokumente**

- EP 1389282 A1
- DE 10226035
- US 7258206 B2
- WO 2009090011 A1